(19)

Europäisches Patentamt
European Patent Office
Office européen des brevets

(11) **EP 2 774 690 A1**

(12) **EUROPEAN PATENT APPLICATION**
published in accordance with Art. 153(4) EPC

(43) Date of publication:
**10.09.2014 Bulletin 2014/37**

(21) Application number: **12845987.2**

(22) Date of filing: **01.11.2012**

(51) Int Cl.:
**B05D 1/04** *(2006.01)*          **B05D 5/06** *(2006.01)*
**G02B 1/11** *(2006.01)*

(86) International application number:
**PCT/JP2012/078387**

(87) International publication number:
**WO 2013/065801 (10.05.2013 Gazette 2013/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.11.2011   JP 2011241864**

(71) Applicant: **Asahi Glass Company, Limited**
**Tokyo 100-8405 (JP)**

(72) Inventors:
• **OTANI, Yoshimi**
  **Tokyo 100-8405 (JP)**
• **TANEDA, Shuji**
  **Tokyo 100-8405 (JP)**

(74) Representative: **Müller-Boré & Partner**
**Patentanwälte PartG mbB**
**Friedenheimer Brücke 21**
**80639 München (DE)**

(54) **METHOD FOR PRODUCING ARTICLE WITH LOW REFLECTION FILM**

(57)     To provide a method for producing an article with a low reflection film, which is applicable to a wide substrate, and with which the rate of transport of a substrate can be made relatively high, the amount of a coating composition required is relatively small, a low reflection film having a uniform thickness can be formed, and a low reflection film with a relatively small haze is easily formed.

A method for producing an article with a low reflection film having a low reflection film on a substrate 2, comprising applying a coating composition to the substrate 2 using an electrostatic coating method of atomizing and electrifying the coating composition so as to be attached to the substrate 2 by static electricity, and baking or drying the coating composition to form the low reflection film, wherein the coating composition contains a dispersion medium (a), fine particles (b) dispersed in the dispersion medium (a), a binder (c) dissolved or dispersed in the dispersion medium (a), and an organic compound (d) having a polar group dissolved or dispersed in the dispersion medium (a).

Fig. 3

**Description**

TECHNICAL FIELD

The present invention relates to a method for producing an article having a low reflection film on a substrate.

BACKGROUND ART

Articles having an antireflection function for the purpose of decreasing reflection of external light and improving the light transmittance have been in practical use. To impart the antireflection function, a method has been known (Patent Document 1) wherein a coating composition for forming a low reflection film is applied to a substrate by a wet coating method (such as a spin coating method or a spray coating method), followed by baking or drying to form a low reflection film.
The spin coating method is a method of dropping a coating composition for forming a low reflection film on a substrate and rotating the substrate to coat the substrate with the coating composition for forming a low reflection film by centrifugal force.
The spray coating method is a method of spraying a coating composition for forming a low reflection film from a spray head over a substrate transported in a predetermined direction to coat the substrate with the coating composition for forming a low reflection film.
However, the spin coating method has the following problems.

·If the substrate is large, it tends to be difficult to rotate such a substrate.
·The low reflection film tends to be thick at the periphery of the substrate, and the thickness of the low reflection film tends to be non-uniform.
·Since the excess composition for forming a low reflection film is blown off from the substrate by centrifugal force, the amount of the coating composition for forming a low reflection film required tends to be large.

Further, the spray coating method has the following problems.
·Since it is necessary to move the spray head back and forth in the substrate width direction, in order to uniformly form the low reflection film on a wide substrate, the rate of transport of the substrate should be low.
·Since the amount of the coating composition for forming a low reflection film which is not attached to the substrate but flies into the air is large, the amount of the coating composition for forming a low reflection film required tends to be large.

PRIOR ART DOCUMENT

PATENT DOCUMENT

Patent Document 1: WO2010/018852

DISCLOSURE OF INVENTION

TECHNICAL PROBLEM

The present invention provides a method for producing an article with a low reflection film, which is applicable to a wide substrate, and with which the rate of transport of a substrate can be made relatively high, the amount of a coating composition required is relatively small, a low reflection film having a uniform thickness can be formed, and a low reflection film with a relatively small haze is easily formed.

SOLUTION TO PROBLEM

The method for producing an article with a low reflection film of the present invention is a method for producing an article having a low reflection film on a substrate, comprising a step of applying a coating composition to the substrate using an electrostatic coating method of atomizing and electrifying the coating composition so as to be attached to the substrate by static electricity, and baking or drying the coating composition to form the low reflection film, wherein the coating composition used in this step comprises a dispersion medium (a), fine particles (b) dispersed in the dispersion medium (a), a binder dissolved or dispersed in the dispersion medium (a), and an organic compound (d) having a polar group dissolved or dispersed in the dispersion medium (a).
The coating composition preferably contains an organic acid as the organic compound (d).

The coating composition preferably contains a terpene derivative as the organic compound (d).

The coating composition preferably contains a cellulose derivative as the organic compound (d).

The coating composition preferably contains an unsaturated carboxylic acid polymer as the organic compound (d).

It is preferred that when the coating composition is applied, the substrate is placed on an electrically conductive substrate.

The substrate is preferably made of glass.

The coating composition is preferably such that the mass ratio [fine particles (b)/binder (c)] of the fine particles (b) to the binder (c) is from 10/90 to 95/5, the total solid content concentration of the fine particles (b) and the binder (c) is from 0.5 to 5.0 mass%, and the content of the organic compound (d) is from 0.01 to 2 parts by mass per 1 part by mass of the solid content of the coating composition.

ADVANTAGEOUS EFFECTS OF INVENTION

According to the method for producing an article with a low reflection film of the present invention, the method is applicable to a wide substrate, the rate of transport of a substrate can be made relatively high, the amount of a coating composition required is relatively small, a low reflection film having a uniform thickness can be formed, and a low reflection film with a relatively small haze is easily formed.

BRIEF DESCRIPTION OF DRAWINGS

Fig. 1 is a cross-sectional view illustrating an example of an article with a low reflection film of the present invention.

Fig. 2 is a cross-sectional view illustrating another example of an article with a low reflection film of the present invention.

Fig. 3 is a view schematically illustrating an example of an electrostatic coating apparatus.

DESCRIPTION OF EMBODIMENTS

<Article with low reflection film>

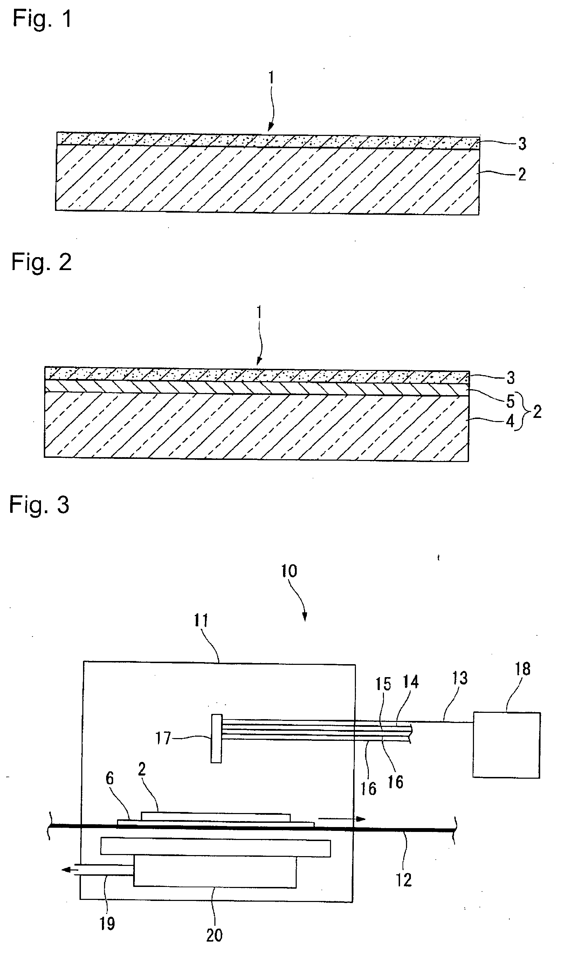

Fig. 1 is a cross-sectional view illustrating an example of an article with a low reflection film obtainable by the production method of the present invention. An article 1 with a low reflection film comprises a substrate 2 and a low reflection film 3 formed on the surface of the substrate 2.

(Substrate)

The material of the substrate 2 may, for example, be glass, a metal, a resin, silicon, wood or paper. Glass may, for example, be soda lime glass, borosilicate glass, aluminosilicate glass, alkali-free glass or mixed alkali type glass. The resin may, for example, be polyethylene terephthalate, polycarbonate, triacetyl cellulose or polymethyl methacrylate.

The shape of the substrate 2 is not particularly limited, and is usually in e.g. a plate or film form.

The substrate 2 for a cover glass of a solar cell is preferably figured glass having pearskin irregularities imparted to one surface. The material of the glass, particularly such figured glass, is preferably highly transparent soda lime glass (i.e. high transmittance glass, popular name: white plate glass) having a lower content of iron than soda lime glass (popular name: blue plate glass) to be used for e.g. conventional window glass. The white plate glass preferably has a composition, as represented by mass percentage based on oxides, comprising from 65 to 75% of $SiO_2$, from 0 to 10% of $Al_2O_3$, from 5 to 15% of CaO, from 0 to 15% of MgO, from 10 to 20% of $Na_2O$, from 0 to 3% of $K_2O$, from 0 to 5% of $Li_2O$, from 0 to 3% of $Fe_2O_3$, from 0 to 5% of $TiO_2$, from 0 to 3% of $CeO_2$, from 0 to 5% of BaO, from 0 to 5% of SrO, from 0 to 15% of $B_2O_3$, from 0 to 5% of ZnO, from 0 to 5% of $ZrO_2$, from 0 to 3% of $SnO_2$ and from 0 to 0.5% of $SO_3$. Further, in a case of alkali-free glass, it preferably has a composition, as represented by mass percentage based on oxides, comprising from 39 to 70% of $SiO_2$, from 3 to 25% of $Al_2O_3$, from 1 to 30% of $B_2O_3$, from 0 to 10% of MgO, from 0 to 17% of CaO, from 0 to 20% of SrO and from 0 to 30% of BaO. Further, in a case of the mixed alkali type glass, it preferably has a composition, as represented by mass percentage based on oxides, comprising from 50 to 75% of $SiO_2$, from 0 to 15% of $Al_2O_3$, from 6 to 24% of MgO+CaO+SrO+BaO+ZnO, and from 6 to 24% of $Na_2O+K_2O$.

In this specification, " to " used to show the range of the numerical values is used to include the numerical values before and after it as the lower limit value and the upper limit value, and unless otherwise specified, the same applies hereinafter.

The substrate 2 may have a functional layer 5 on the surface of a substrate main body 4, as shown in Fig. 2.

The functional layer 5 may, for example, be an undercoat layer, an adhesion-improving layer or a protective layer.

The undercoat layer has a function as an alkali barrier layer or a wide band low refractive index layer. The undercoat layer is preferably a layer formed by applying a coating composition for an undercoat layer containing a hydrolyzate of an alkoxysilane (sol-gel silica i.e. silica precursor by the sol-gel process) to a substrate. In a case where the after-mentioned coating composition for a low reflection film is to be applied on the undercoat layer, the undercoat layer may preliminarily be baked or may be in a wet state. In a case where the coating composition for a low reflection film is to be applied on the undercoat layer, the application temperature (i.e. the temperature of the substrate at the time of application) is preferably from room temperature to 80°C, and the temperature for baking the applied coating film is preferably from 30 to 700°C. The thickness of the undercoat layer is preferably from 10 to 500 nm.

(Low reflection film)

The low reflection film 3 is a film containing a binder (c) or its baked product and fine particles (b), formed by applying the after-mentioned coating composition to the substrate 2 by an electrostatic coating method and baking or drying the composition. In a case where the binder is a hydrolyzate of an alkoxysilane, the low reflection film 3 is a film having fine particles (b) dispersed in a matrix comprising a baked product ($SiO_2$) of the hydrolyzate of an alkoxysilane. In a case where the binder is a resin, the low reflection film 3 is a film having fine particles (b) dispersed in a matrix comprising the resin. The low reflection film 3 may be a single layer film or a film consisting of a plurality of layers.

The thickness of the low reflection film 3 is preferably from 50 to 300 nm, more preferably from 80 to 200 nm. When the thickness of the low reflection film 3 is at least 50 nm, interference of light will occur, whereby the antireflection function will develop. When the thickness of the low reflection film 3 is at most 300 nm, the film can be formed without cracks.

The thickness of the low reflection film 3 is measured by a reflective film thickness meter.

The reflectance of the low reflection film 3 is preferably at most 2.6%, more preferably at most 1.0% by the lowest value (so-called bottom reflectance) within a wavelength range of from 300 to 1,200 nm.

<Method for producing article with low reflection film>

The method for producing an article with a low reflection film of the present invention comprises applying the after-mentioned coating composition as a coating liquid to the substrate 2 transported in a predetermined direction by an electrostatic coating method, and baking or drying the formed coating film to cure the coating film thereby to form the low reflection film 3.

(Electrostatic coating apparatus)

Fig. 3 is a view schematically illustrating an example of an electrostatic coating apparatus.

An electrostatic coating apparatus 10 comprises a coating booth 11; a chain conveyor 12 which passes through the coating booth 11 and transports an electrically conductive substrate 6 and a substrate 2 placed on the electrically conductive substrate 6 in a predetermined direction; a plurality of electrostatic coating guns 17 arranged in parallel in a direction at right angles to the direction of transport of the substrate 2, in the coating booth 11 above the chain conveyor 12, each connected to a high voltage cable 13, a coating composition supply line 14, a coating composition recovery line 15 and two systems of air supply lines 16; a high voltage generator 18 which is connected to the electrostatic coating gun 17 via the high voltage cable 13 and which is grounded; and an exhaust box 20 to which an exhaust duct 19 is connected, disposed below the electrostatic coating guns 17 and the chain conveyor 12.

The chain conveyor 12 is constituted by a plurality of plastic chains, and some of the plastic chains are replaced with electrically conductive plastic chains to have electrical conductivity. Further, the chain conveyor 12 is grounded via metal chains (not shown) into which the plastic chains are inserted and a ground cable (not shown) of their drive motor (not shown).

At the time of application, the substrate 2 is placed on the electrically conductive substrate 6. Since the electrically conductive substrate 6 has electrical conductivity, the substrate 2 is sufficiently grounded via the chain conveyor 12, the metal chains and the ground cable of the drive motor, and the coating composition is uniformly applied to the substrate 2. The electrically conductive substrate 6 is preferably a metal mesh tray, with which the temperature decrease of the substrate 2 is suppressed and the temperature distribution can be made uniform.

Each electrostatic coating gun 17 is fixed to a nozzle set frame (not shown). By the nozzle set frame, the distance between the nozzle tip of the electrostatic coating gun 17 and the substrate 2, the angle of the electrostatic coating gun 17 to the substrate 2, the direction of arrangement of the plurality of electrostatic coating guns 17 to the direction of transport of the substrate 2, etc., can be adjusted.

Since a high voltage is applied to the nozzle tip of each electrostatic coating gun 17, the coating composition supply line 14 and the recovery line 15, the portions where the electrostatic coating guns 17, the supply line 14 and the recovery line 15 are connected to metals (e.g. the nozzle set frame, the side wall portions of the coating booth 11 where the lines pass through) are insulated e.g. with a resin.

The electrostatic coating apparatus is not limited to the apparatus shown. A known electrostatic coating apparatus may be employed so long as the coating composition can be applied to the substrate 2 by the electrostatic coating method.

(Application method)

in the electrostatic coating apparatus 10, the coating composition is applied to the surface of the substrate 2 and a coating film is formed as follows.

By the high pressure generator 18, a high voltage is applied to the nozzle tip of each electrostatic coating gun 17. Simultaneously, the coating composition is supplied from the coating composition supply line 14 to the electrostatic coating gun 17 and at the same time, the air is supplied from the air supply line 16 to the electrostatic coating gun 17. Particles of the coating composition sprayed from the nozzle tip of the electrostatic coating gun 17 and negatively charged, are attracted by electrostatic attraction toward the grounded substrate 2 and are efficiently attached to the substrate 2.

A part of the coating composition which is not sprayed from the nozzle tip of the electrostatic coating gun 17 is recovered to a coating composition tank (not shown) through the coating composition recovery line 15. Further, a part of the coating composition which is sprayed from the nozzle tip of the electrostatic coating gun 17 and is not attached to the substrate 2 is sucked by the exhaust box 20 and is recovered through the exhaust duct 19.

The surface temperature of the substrate 2 is preferably from room temperature to 80°C, more preferably from room temperature to 70°C. If the surface temperature is higher than 80°C, droplets of the coating liquid are dried too fast, whereby haze and uneven coating are likely to occur. On the other hand, if the surface temperature is lower than room temperature, drying will take long, and the film quality is likely to be influenced by the application environment and the application conditions.

The rate of transport of the substrate 2 is preferably from 0.6 to 80.0 m/min, more preferably from 2.0 to 60.0 m/min. When the rate of transport of the substrate 2 is at least 0.6 m/min, the productivity will improve. When the rate of transport of the substrate 2 is at most 80.0 m/min, the thickness of the coating composition to be applied to the substrate 2 is likely to be controlled.

The distance between the nozzle tip of each electrostatic coating gun 17 and the substrate 2 is properly adjusted in accordance with e.g. the width of the substrate 2 and the thickness of the coating composition to be applied to the substrate 2, and is usually from 150 to 450 mm. When the distance to the substrate 2 is short, the application efficiency will be high, however, if the distance is too short, the probability of discharge tends to be high, such being problematic in view of the safety. On the other hand, as the distance to the substrate 2 is longer, the application region will expand, however, if the distance is too long, the coating efficiency tends to be low.

The voltage applied to the nozzle tip of the electrostatic coating gun 17 is properly adjusted in accordance with e.g. the amount of the coating composition applied to the substrate 2, and is usually within a range of from -30 kV to -90 kV. The application efficiency tends to be high when the absolute value of the voltage is larger. Here, the application efficiency will reach saturation when the application voltage is high to a certain extent, although it depends on the liquid properties, the application environment and the application conditions.

The amount of supply of the coating composition to the electrostatic coating gun 17 is properly adjusted in accordance with e.g. the amount of the coating composition applied to the substrate 2, and is usually from 40 to 600 mL/min. If the supply amount is too small, the film may be broken. As the maximum supply amount, an optimum value may be selected in accordance with e.g. the coating film thickness, the application speed or the liquid properties.

The pressure of the air supplied to the electrostatic coating gun 17 is properly adjusted in accordance with e.g. the amount of the coating composition applied to the substrate 2, and is usually from 0.01 MPa to 0.5 MPa. The air to be supplied is formed by two systems in combination of a system to control the speed of rotation of the electrostatic coating gun 17 and a system to control the application pattern. When the air pressure of the system to control the speed of rotation is increased, the droplets become fine by an increase in the speed of rotation, and the application pattern tends to be broad. On the other hand, when the air pressure of the system to control the application pattern is increased, expansion of droplets sprayed is suppressed, and the coating composition can be efficiently applied to the substrate 2. By adjusting the balance of these air pressures, both the uniformity of the film and the application efficiency can be satisfied. Specifically, if the air pressure is lower than 0.01 MPa, the droplets tend to spread too expansively, thus impairing the outer appearance and the uniformity of the film, and further, it tends to be difficult to control the shape of the application pattern, and the application efficiency will be low. On the other hand, if the air pressure is higher than 0.5 MPa, such is disadvantageous in view of the cost since a pressure-resistant member is required for the air supply line 14, and such is not particularly advantageous in view of the productivity and the film quality.

(Drying, baking)

The temperature for drying or baking the coating film of the coating composition is preferably at least 30°C, and is properly determined in accordance with the materials of the substrate 2 and the fine particles (b) or the binder (c). For example, in a case where both the materials of the substrate 2 and the fine particles (b) or the binder (c) are a resin, the drying or baking temperature is at most the heat resistant temperature of the resin, and even if it is at most the heat resistant temperature, a sufficient antireflection function will be obtained. The baking temperature is preferably at least 30°C and at most 700°C. In a case where the substrate 2 is made of glass, the step of baking the low reflection film 3 and the step of physically tempering the glass may be conducted simultaneously. In the physical tempering step, the glass is heated to the vicinity of the softening temperature. In such a case, the baking temperature is set to from about 600 to about 700°C. The baking temperature is usually preferably at most the heat distortion temperature of the substrate 2. The lower limit of the baking temperature is determined in accordance with blending of the coating composition. Polymerization proceeds to a certain extent even by air drying, and accordingly the drying or baking temperature may theoretically be set to the temperature in the vicinity of room temperature, if there is no restrictions on time.

(Coating composition)

The coating composition contains a dispersing medium (a), fine particles (b) dispersed in the dispersion medium (a), a binder (c) dissolved or dispersed in the dispersion medium (a) and an organic compound (d) having a polar group dissolved or dispersed in the dispersion medium (a), and as the case requires, other additives. The coating composition is prepared, for example, by mixing a fine particle (b) dispersion, a binder (c) solution, the organic compound (d), and as the case requires, an additional dispersion medium (a) and other additives.

The solid content concentration of the coating composition is preferably from 0.5 to 5.0 mass%, more preferably from 0.9 to 2.0 mass%. When the solid content concentration is at least 0.5 mass%, the coating film of the coating composition can be made thin, and the thickness of the low reflection film 3 finally obtainable tends to be uniform. When the solid content concentration is at most 5.0 mass%, the thickness of the coating film of the coating composition applied to the substrate 2 tends to be uniform.

The solid content of the coating composition means the total of the fine particles (b) and the binder (c) (provided that when the binder (c) is a hydrolyzate of an alkoxysilane, the solid content concentration as calculated as $SiO_2$).

The content of the organic compound (d) is preferably from 0.01 to 2 parts by mass, more preferably from 0.03 to 1 part by mass per 1 part by mass of the solid content of the coating composition. When the content of the organic compound (d) is at least 0.01 part by mass, agglomeration of the fine particles (b) by static electricity at the time of electrostatic coating is sufficiently suppressed and as a result, a low reflection film with a sufficiently small haze will be formed. When the content of the organic compound (d) is at most 2 parts by mass, the strength of the low reflection film 3 will be favorable.

The mass ratio (fine particles/binder) of the fine particles (b) to the binder (c) is preferably from 95/5 to 10/90, more preferably from 70/30 to 90/10. When the mass ratio of fine particles/binder is at most 95/5, the adhesion between the low reflection film 3 and the substrate 2 will be sufficiently high. When the mass ratio of fine particles/binder is at least 10/90, the antireflection function will be sufficiently high.

The coating composition of the present invention is preferably such that the mass ratio [fine particles (b)/binder (c)] of the fine particles (b) to the binder (c) is from 10/90 to 95/5, the total solid content concentration of the fine particles (b) and the binder (c) is from 0.5 to 5.0 mass%, and the content of the organic compound (d) is from 0.01 to 2 parts by mass per 1 part by mass of the solid content of the coating composition.

(Dispersion medium (a))

The dispersion medium (a) (excluding the after-mentioned organic compound (d)) may, for example, be water, an alcohol (such as methanol, ethanol, isopropanol, butanol or diacetone alcohol), a ketone (such as acetone, methyl ethyl ketone or methyl isobutyl ketone), an ether (such as tetrahydrofuran or 1,4-dioxane), a cellosolve (such as methyl cellosolve or ethyl cellosolve), an ester (such as methyl acetate or ethyl acetate), a glycol ether (such as ethylene glycol monoalkyl ether), a nitrogen-containing compound (such as N,N-dimethylacetamide, N,N-dimethylformamide or N-methylpyrrolidone), or a sulfur-containing compound (such as dimethylsulfoxide).

The dispersion medium (a) when the binder (c) is a hydrolyzate of an alkoxysilane is required to contain water since water is required for hydrolysis of the alkoxysilane.

The dispersion medium (a) is preferably properly selected depending upon the substrate 2 or the binder (c).

The dispersion medium (a) when the substrate 2 is made of polycarbonate is preferably an alcohol dispersion medium containing a solvent (such as a nitrogen-containing compound) in which the polycarbonate is soluble.

The dispersion medium (a) when the substrate 2 is made of polyethylene terephthalate is preferably an alcohol dispersion medium containing a solvent (such as dichloromethane) in which the polyethylene terephthalate is soluble.

In a case where the substrate 2 is made of triacetylcellulose, the binder (c) may, for example, be a polyester, an acrylic resin or a silicone resin, and the dispersion medium (a) when the binder (c) is made of a polyester is preferably ethyl acetate or the like.

(Fine particles (b))

As the fine particles (b), at least one member selected from the group consisting of metal oxide fine particles, metal fine particles, pigment fine particles and resin fine particles may be mentioned as a preferred material.

As the material of the metal oxide fine particles, at least one member selected from the group consisting of $Al_2O_3$, $SiO_2$, $SnO_2$, $TiO_2$, $ZrO_2$, $ZnO$, $CeO_2$, Sb-containing $SnO_x$ (ATO), Sn-containing $In_2O_3$ (ITO) and $RuO_2$ may be mentioned as a preferred material. Among them $SiO_2$ is particularly preferred since it has a low reflective index and is thereby suitable as the material of the low reflection film 3.

As the material of the metal fine particles, a metal such as Ag or Ru or an alloy such as AgPd or RuAu may, for example, be mentioned.

As the pigment fine particles, an inorganic pigment such as titanium black or carbon black or an organic pigment may be mentioned.

As the material of the resin fine particles, an acrylic resin, a polystyrene or a melamine resin may, for example, be mentioned.

The shape of the fine particles (b) may, for example, be spheres, ellipses, needles, plates, rods, cones, columns, cubes, rectangular parallelepipeds, diamonds, stars or indefinite shape. Further, the fine particles (b) may be hollow or perforated or may have communicating holes. Further, the fine particles (b) may be independent of one another, they may be connected to one another in a chain form, or they may be agglomerated. The fine particles (b) may be a mixture of the above shapes.

The fine particles (b) may be used alone or in combination of two or more.

The average agglomerated particle size of the fine particles (b) is preferably from 1 to 1,000 nm, more preferably from 3 to 500 nm, further preferably from 5 to 300 nm. When the average agglomerated particle size of the fine particles (b) is at least 1 nm, a sufficiently high antireflection effect will be obtained. When the average agglomerated particle size of the fine particles (b) is at most 1,000 nm, the haze of the low reflection film 3 will be suppressed to be low.

The average agglomerated particle size of the fine particles (b) is the average agglomerated particle size of the fine particles (b) in the dispersion medium (a) and is measured by a dynamic light scattering method. In the case of monodispersed fine particles (b) without agglomeration, the average agglomerated particle size is equal to the average primary particle size.

The low reflection film 3 in the present invention achieves an antireflection effect by voids formed selectively around the fine particles (b), and accordingly it is not necessarily required to use a material having a low refractive index (such as $SiO_2$) as the material of the fine particles (b). Accordingly, a low reflection film 3 having both various properties of the fine particles (b) and antireflection effect can be formed. For example, in a case where the material of the fine particles (b) is $SiO_2$, the refractive index of the low reflection film 3 can be made lower, whereby a low reflection film 3 having a sufficiently low reflectance can be formed. Further, in a case where the material of the fine particles (b) is ATO, a low reflection film 3 having both electrical conductivity and/or infrared shielding property and antireflection effect can be formed. Further, in a case where the material of the fine particles (b) is $CeO_2$ or $ZnO$, a low reflection film 3 having both ultraviolet absorbing property and antireflection effect can be formed. Further, even in a case where the material of the fine particles (b) is $TiO_2$ having a high refractive index, the low reflection film 3 can be formed by single layer coating, which has not been achieved, and accordingly a low reflection film 3 having both hydrophilicity, antibactericidal property, etc. which $TiO_2$ has and antireflection effect can be formed. Further, even in a case where the material of the fine particles (b) is a thermally decomposable acrylic resin, a low reflection film 3 can be formed. Further, in a case where the material of the fine particles (b) is an organic pigment or an inorganic pigment, a colored low reflection film 3 can be formed, and e.g. a colored filter having an antireflection function can be produced.

(Binder (c))

The binder (c) may, for example, be a hydrolyzate of an alkoxysilane (sol-gel silica) or a resin (such as a thermoplastic resin, a thermosetting resin or an ultraviolet-curable resin).

The binder (c) is preferably properly selected depending upon the substrate 2.

The binder (c) when the substrate 2 is made of glass is preferably a hydrolyzate of an alkoxysilane.

The alkoxysilane may, for example, be a tetraalkoxysilane (such as tetramethoxysilane, tetraethoxysilane, tetrapropoxysilane or tetrabutoxysilane), an alkoxysilane having a perfluoropolyether group (such as perfluoropolyether triethoxysilane), an alkoxysilane having a perfluoroalkyl group (such as perfluoroethyltriethoxysilane), an alkoxysilane having a vinyl group (such as vinyl trimethoxysilane or vinyl triethoxysilane), an alkoxysilane having an epoxy group (such as 2-(3,4-epoxycyclohexyl)ethyltrimethoxysilane, 3-glycidoxypropyltrimethoxysilane, 3-glycidoxypropylmethyldiethoxysilane or 3-glycidoxypropyltriethoxysilane), or an alkoxysilane having an acryloyloxy group (such as 3-acryloyloxypropyltrimethoxysilane).

Hydrolysis of the alkoxysilane is carried out, in the case of a tetraalkoxysilane, using water in an amount of at least 4 times the molar amount of the alkoxysilane and an acid or alkali as the catalyst. The acid may, for example, be an inorganic acid (such as $HNO_3$, $H_2SO_4$ or HCl) or an organic acid (such as formic acid, oxalic acid, monochloroacetic acid, dichloroacetic acid or trichloroacetic acid). The alkali may, for example, be ammonia, sodium hydroxide or potassium hydroxide. The catalyst is preferably an acid in view of the long term storage property, and the catalyst is preferably one which will not inhibit dispersion of the fine particles (b).

(Organic compound (d))

By the organic compound (d) having a polar group, agglomeration of the fine particles (b) by static electricity in the coating composition is suppressed and as a result, a low reflection film with a sufficiently small haze will be formed.
The organic compound (d) is preferably one having a hydroxy group and/or a carbonyl group in its molecule in view of the antireflection effect of the low reflection film 3, and is more preferably one having at least one functional group selected from the group consisting of a hydroxy group, and aldehyde group (-CHO), a keto group (-C(=O)-), an ester bond (-C(=O)O-) and a carboxy group (-COOH) in its molecule, further preferably one having at least one functional group selected from the group consisting of a carboxy group, a hydroxy group, an aldehyde group and a keto group in its molecule.
The organic compound (d) is preferably an organic acid (excluding an unsaturated carboxylic acid polymer), a terpene derivative, a cellulose derivative or an unsaturated carboxylic acid polymer.
The coating composition preferably contains at least an organic acid, more preferably contains an organic acid and at least one member selected from the group consisting of a terpene derivative, a cellulose derivative and an unsaturated carboxylic acid polymer.
The above organic acid may, for example, be formic acid, oxalic acid, monochloroacetic acid, dichloroacetic acid, trichloroacetic acid, citric acid, tartaric acid or maleic acid.
The organic acid may be used alone or in combination of two or more.
In a case where an organic acid is used as the catalyst for hydrolysis of the alkoxysilane, this organic acid is also included in the organic acid as the compound (d).
A terpene means a hydrocarbon having a composition of $(C_5H_8)_n$ (wherein n is an integer of at least 1) comprising isoprene $(C_5H_8)$ as a constituting unit. A terpene derivative means a terpene having a functional group derived from a terpene. The terpene derivative (d) includes one having a different degree of unsaturation.
The terpene derivative may, for example, be a terpene alcohol (such as α-terpineol, terpinen-4-ol, L-menthol, (±) citronellol, myrtenol, borneol, nerol, farnesol or phytol), a terpene aldehyde (such as citral, β-cyclocitral or perillaldehyde), a terpene ketone (such as (±) camphor or β-ionone), a terpene carboxylic acid (such as citronellic acid or abietic acid) or a terpene ester (such as terpinyl acetate or menthyl acetate).
The terpene derivative may be used alone or in combination of two or more.
The cellulose derivative may be a polyhydroxyalkylcellulose.
The unsaturated carboxylic acid polymer may be a polyacrylic acid.

(Other additives)

As other additives, a surfactant to improve the leveling property, or a metal compound to improve the durability of the low reflection film 3 may, for example, be mentioned.
The surfactant may, for example, be a silicone oil type or an acrylic type.
The metal compound is preferably a zirconium chelate compound, a titanium chelate compound, an aluminum chelate compound or the like. The zirconium chelate compound may, for example, be zirconium tetraacetyl acetonate or zirconium tributoxy stearate.

(Function and effects)

By the above-described method for producing an article with a low reflection film of the present invention, the coating composition is applied by an electrostatic coating method as mentioned above, and accordingly negatively charged particles of the coating composition are attracted by electrostatic attraction toward the grounded substrate and are efficiently attached to the substrate. Accordingly, the method is applicable to a wide substrate, and by the method, the amount of the coating composition required is relatively small, and a low reflection film having a uniform thickness can be formed. Further, since it is not necessary to move the electrostatic coating guns back and forth in the substrate width direction, the rate of transport of the substrate can be made relatively high.

Further, by the above-described method for producing an article with a low reflection film of the present invention, since the coating composition contains the organic compound (d) having a polar group, the surface of the fine particles (b) is covered with the organic compound (d), and agglomeration of the fine particles (b) by electrostatic attraction at the time of electrostatic coating is supplied and as a result, a low reflection film with a small haze will be formed. That is, since the functional group (such as a hydroxy group or a carboxy group) of the organic compound (d) having a polar group (such as an organic acid) is greatly polarized, it is likely to be bonded to the surface of the fine particles (b) and as a result, the surface of the fine particles (b) is likely to be covered with the organic compound (d). Further, by the steric hindrance by the organic compound (d) covering the surface of the fine particles (b), agglomeration of the fine particles (b) by electrostatic attraction at the time of electrostatic coating is suppressed.

Further, since the above-described coating composition contains the dispersion medium (a), the fine particles (b) and the binder (c), a low reflection film having an antireflection effect can be formed at a low cost and even at relatively low temperature.

That is, by using the above-described coating composition to form a low reflection film, since voids are formed selectively around the fine particles (b) in the low reflection film, the antireflection function is improved by the voids.

Further, in a case where the coating composition contains the organic compound (d) having a polar group, since the volume of the voids is increased, the antireflection effect tends to be higher.

Further, the above-described article with a low reflection film has a coating film which has a high antireflection effect and which can be formed at a low cost and even at relatively low temperature, and accordingly it has a high antireflection effect, and further, a substrate which can be used for producing such an article is not restricted so much, and such an article can be produced at a relative low cost.

EXAMPLES

Now, the present invention will be described in further detail with reference to Examples.

Examples 2 to 9, 11 to 13, 15 and 16 are Examples of the present invention, and Examples 1, 10 and 14 are Comparative Examples.

(Thickness of outer shell and porosity of hollow fine particles)

The thickness of the outer shell and the porosity of hollow fine particles used as the fine particles were obtained in such a manner that a dispersion of the hollow fine particles was diluted with ethanol to 0.1 mass%, and sampled on a collodion membrane and observed by a transmission electron microscope (H-9000 manufactured by Hitachi, Ltd.), 100 hollow fine particles were randomly selected, the thickness of the outer shell and the porosity of each hollow fine particle were measured, and averages of the thickness of the outer shell and the porosity of the 100 hollow fine particles were obtained.

(Average agglomerated particle size of fine particles)

The average agglomerated particle size of the fine particles was measured by using a dynamic light scattering particle size analyzer (Microtrac UPA manufactured by NIKKISO CO., LTD.)

(Thickness)

The thickness of the low reflection film was measured in such a manner that the spectral reflectance was measured by a reflective film thickness meter (FE3000 manufactured by Otsuka Electronics Co., Ltd.), and a curve obtained from the n-k Cauchy dispersion equation by the least-squares method and an actually measured reflectance curved were fitted.

(Transmittance)

As the transmittance of the article with a low reflection film, a reflectance to light having a wavelength of from 400 nm to 1,100 nm was measured by a spectrophotometer (V670 manufactured by JEOL Ltd.).

The difference in the transmittance was obtained from the following formula (1).

$$\text{Difference in transmittance} = (\text{transmittance of the article with a low reflection film}) - (\text{transmittance of only the substrate}) \qquad (1)$$

(Reflectance)

A black vinyl tape was bonded to the surface of a substrate opposite from the low reflection film so that no bubbles were included, and the reflectance of the low reflection film of 100 mm × 100 mm at the center portion of the substrate was measured. The reflectance is a bottom reflectance within a wavelength range of from 300 to 1,200 nm (i.e. the lowest value within a wavelength range of from 300 to 1,200 nm). In a case where the wavelength at which the bottom reflectance was obtained was at most 380 nm or at least 780 nm, a spectrophotometer (V670 manufactured by JEOL, Ltd.) was used. Further, when the wavelength at which the bottom reflectance was obtained was from 380 to 780 nm, a spectrophotometer (instantaneous multipoint measurement monitor MCPD-3000 manufactured by Otsuka Electronics Co., Ltd.) was used.

(Abrasion resistance)

A felt pad (pressing buff, AM-1 manufactured by Niitakarika Kogyo K.K.) was attached to a rubbing tester (manufactured by Taiheirika Kogyo K.K.), and the felt pad was horizontally moved back and forth on the surface of the low reflection film under a load of $1.0 \text{ kg/cm}^2$, and after the felt pad was moved back and forth 40 times, the change of the outer appearance of the article with a low reflection film was evaluated. To evaluate the change of the outer appearance, the article with a low reflection film was placed on a fluorescent screen, the surface of the low reflection film was visually observed from a position of 20 cm from the fluorescent screen, and the change of the outer appearance was evaluated based on the following standards.
◎: No scars observed on the coating film.
○: Scars slightly observed on the coating film.
△: Many scars observed on the coating film.
×: The coating film completely disappeared.

(Preparation of binder solution (c-1))

To 80.39 g of denatured ethanol (SOLMIX AP-11, manufactured by Japan Alcohol Trading Co., Ltd., mixed solvent comprising ethanol as the main component, the same applies hereinafter) with stirring, 11.85 g of deionized water and 0.009 g of 61 % nitric acid were added, followed by stirring for 5 minutes. To the mixture, 7.6 g of tetraethoxysilane (solid content concentration as calculated as $SiO_2$: 29 mass%) was added, followed by stirring at room temperature for 60 minutes to prepare a binder solution (c-1) having a solid content concentration as calculated as $SiO_2$ of 2.2 mass%.
The solid content concentration as calculated as $SiO_2$ is the solid content concentration when all the Si of tetraethoxysilane is converted to $SiO_2$.

(Preparation of binder solution (c-2))

To 80.49 g of denatured ethanol (SOLMIX AP-11) with stirring, a mixed liquid of 11.85 g of deionized water and 0.016 g of oxalic anhydride was added, followed by stirring for 5 minutes. To the mixture, 7.6 g of tetraethoxysilane (solid content concentration as calculated as $SiO_2$: 29 mass%) was added, followed by stirring at room temperature for 60 minutes to prepare a binder solution (c-2) having a solid content as calculated as $SiO_2$ of 2.2 mass%.
The solid content concentration as calculated as $SiO_2$ is the solid content concentration when all the Si of tetraethoxysilane is converted to $SiO_2$.

(Preparation of binder solution (c-3))

To 80.49 g of denatured ethanol (SOLMIX AP-11) with stirring, a mixed liquid of 11.85 g of deionized water and 0.015 g of L-tartaric acid was added, followed by stirring for 5 minutes. To the mixture, 7.6 g of tetraethoxysilane (solid content concentration as calculated as $SiO_2$: 29 mass%) was added, followed by stirring at room temperature for 60 minutes to prepare a binder solution (c-3) having a solid content as calculated as $SiO_2$ of 2.2 mass%.
The solid content concentration as calculated as $SiO_2$ is the solid content concentration when all the Si of tetraethoxysilane is converted to $SiO_2$.

(Preparation of binder solution (c-4))

To 80.49 g of denatured ethanol (SOLMIX AP-11) with stirring, a mixed liquid of 11.85 g of deionized water and 0.015 g of citric acid was added, followed by stirring for 5 minutes. To the mixture, 7.6 g of tetraethoxysilane (solid content concentration as calculated as $SiO_2$: 29 mass%) was added, followed by stirring at room temperature for 60 minutes to prepare a binder solution (c-4) having a solid content as calculated as $SiO_2$ of 2.2 mass%.

The solid content concentration as calculated as $SiO_2$ is the solid content concentration when all the Si of tetraethoxysilane is converted to $SiO_2$.

(Preparation of hollow $SiO_2$ fine particle dispersion (b-1))

To 29.07 g of denatured ethanol with stirring, 39 g of water, 21 g of a ZnO fine particle dispersion (FZO-50, manufactured by Ishihara Sangyo Kaisha, Ltd., solid content concentration: 20 mass, average primary particle size: 21 nm, average agglomerated particle size: 40 nm) and 10 g of tetraethoxysilane (solid content as calculated as $SiO_2$: 29 mass%) were added, and 0.75 g of a 28 mass% aqueous ammonia solution was added to adjust the pH of the dispersion to 10, followed by stirring at 20°C for 4.5 hours. To the dispersion, 0.18 g of zirconium tetraacetyl acetonate (manufactured by Kanto Chemical Co., Inc.) was added, followed by stirring for 1.5 hours to obtain 100 g of a core-shell fine particle dispersion (solid content concentration: 7.2 mass%).

To the obtained core-shell fine particle dispersion, 100 g of a strongly acidic cation exchange resin (DIAION manufactured by Mitsubishi Chemical Corporation, total exchange capacity: at least 2.0 mseq/mL) was added, followed by stirring for 1 hour, and after the pH became 4, the strongly acidic cation resin was removed by filtration to obtain 100 g of a hollow $SiO_2$ fine particle dispersion having a solid content concentration as calculated as $SiO_2$ of 3 mass%. The thickness of the outer shell of the hollow $SiO_2$ fine particle was 6 nm, the pore size was 30 nm, and the average agglomerated particle size was 50 nm. The hollow $SiO_2$ fine particle dispersion was concentrated by an ultrafiltration membrane to obtain a hollow $SiO_2$ fine particle dispersion (b-1) having a solid content concentration as calculated as $SiO_2$ of 12 mass%.

(Preparation of coating composition (A))

To 43.48 g of denatured ethanol with stirring, 12.27 g of the binder solution (c-1) and 5.25 g of the hollow $SiO_2$ fine particle dispersion (b-1) were added, and 15.0 g of diacetone alcohol (hereinafter referred to as DAA), 24.0 g of 2-butanol, 0.1 g of $\alpha$-terpineol as a terpene derivative and 0.1 g of aluminum triacetyl acetonate (hereinafter referred to as $Al(AcAc)_3$) were added to prepare a coating composition (A) having a solid content concentration of 0.9 mass%. The composition is shown in Table 1.

(Preparation of coating composition (B))

To 43.48 g of denatured ethanol with stirring, 12.27 g of the binder solution (c-2) and 5.25 g of the hollow $SiO_2$ fine particle dispersion (b-1) were added, and 15.0 g of DAA, 24.0 g of 2-butanol, 0.1 g of $Al(AcAc)_3$ and 0.5 g of $\alpha$-terpineol were added to prepare a coating composition (B) having a solid content concentration of 0.9259 mass%. The composition is shown in Table 1.

(Preparation of coating compositions (C) to (I))

Coating compositions (C) to (I) were prepared in the same manner as in the preparation of the coating composition (B) except that the composition was changed as identified in Table 1. The composition is shown in Table 1.

(Preparation of coating composition (J))

To 46.63 g of denatured ethanol with stirring, 12.27 g of the binder solution (c-1) and 2.10 g of a $TiO_2$ fine particle dispersion (b-2) (SNS-01 manufactured by Ishihara Sangyo Kaisha, Ltd.) were added, and 15.0 g of DAA and 24.0 g of 2-butanol were added to prepare a coating composition (J) having a solid content concentration of 0.8991 mass%. The composition is shown in Table 1.

(Preparation of coating composition (K))

To 46.63 g of denatured ethanol with stirring, 12.27 g of the binder solution (c-1) and 2.10 g of the $TiO_2$ fine particle dispersion (b-2) were added, and 15.0 g of DAA, 24.0 g of 2-butanol, 0.1 of $Al(AcAc)_3$ and 0.5 g of $\alpha$-terpineol

were added to prepare a coating composition (K) having a solid content concentration of 0.9259 mass%. The composition is shown in Table 1.

(Preparation of coating compositions (L) to (M))

Coating compositions (L) to (M) were prepared in the same manner as in the preparation of the coating composition (K) except that the composition was changed as identified in Table 1. The composition is shown in Table 1.

(Preparation of coating composition (N))

To 42.43 g of denatured ethanol with stirring, 12.27 g of the binder solution (c-1) and 6.30 g of a water soluble acrylic resin fine particle dispersion (b-3) (EPOSTAR MX-030W manufactured by NIPPON SHOKUBAI CO., LTD.) were added, and 15.0 g of DAA and 24.0 g of 2-butanol were added to prepare a coating composition (N) having a solid content concentration of 0.8991 mass%. The composition is shown in Table 1.

(Preparation of coating composition (O))

To 42.43 g of denatured ethanol with stirring, 12.27 g of the binder solution (c-1) and 6.30 g of the water soluble acrylic resin fine particle dispersion (b-3) were added, and 15.0 g of DAA, 24.0 g of 2-butanol, 0.1 g of Al(AcAc)3 and 0.5 g of α-terpineol were added to prepare a coating composition (O) having a solid content concentration of 0.9259 mass%. The composition is shown in Table 1.

(Preparation of coating composition (P))

A coating composition (P) was prepared in the same manner as in the preparation of the coating composition (O) except that the composition was changed as identified in Table 1. The composition is shown in Table 1.

[Table 1]

| Coating composition | Blend | | | | | | | |
| | Binder (c) solution | | Fine particle (b) dispersion | | Organic compound (d) having polar group | | | |
| | Type | Amount [g] | Type | Amount [g] | Type | Amount [g] | Type | Amount [g] |
| A | c-1 | 12.27 | b-1 | 5.25 | - | - | - | - |
| B | c-2 | 12.27 | b-1 | 5.25 | d1-1 | 0.5 | d2-1 | 0.0018 |
| C | c-2 | 12.27 | b-1 | 5.25 | d1-3 | 0.5 | d2-1 | 0.0018 |
| D | c-3 | 12.27 | b-1 | 5.25 | d1-1 | 0.5 | d2-2 | 0.0018 |
| E | c-3 | 12.27 | b-1 | 5.25 | d1-2 | 0.5 | d2-2 | 0.0018 |
| F | c-3 | 12.27 | b-1 | 5.25 | d1-3 | 0.5 | d2-2 | 0.0018 |
| G | c-4 | 12.27 | b-1 | 5.25 | d1-1 | 0.5 | d2-3 | 0.0018 |
| H | c-4 | 12.27 | b-1 | 5.25 | d1-2 | 0.5 | d2-3 | 0.0018 |
| I | c-4 | 12.27 | b-1 | 5.25 | d1-3 | 0.5 | d2-3 | 0.0018 |
| J | c-1 | 12.27 | b-2 | 2.10 | - | - | - | - |
| K | c-1 | 12.27 | b-2 | 2.10 | d1-1 | 0.5 | - | - |
| L | c-1 | 12.27 | b-2 | 2.10 | d1-2 | 0.5 | - | - |
| M | c-1 | 12.27 | b-2 | 2.10 | d1-3 | 0.5 | - | - |
| N | c-1 | 12.27 | b-3 | 6.30 | - | - | | |
| O | c-1 | 12.27 | b-3 | 6.30 | d1-1 | 0.5 | - | - |
| P | c-1 | 12.27 | b-3 | 6.30 | d1-3 | 0.5 | - | - |

[Table 1] (continued)

| Coating compo-sition | Blend | | | | | Composition | | |
|---|---|---|---|---|---|---|---|---|
| | Other additives | | Additional dispersion medium (a) [g] | | | Solid content concen-tration [mass%] | (b)/(c) mass ratio | (d) [part by mass]/1 part by mass of solid content |
| | Type | Amount [g] | AP-11 | DAA | 2-Butanol | | | |
| A | - | - | 43.48 | 15.0 | 24.0 | 0.90 | 70/30 | 0.0 |
| B | Al(AcAc)₃ | 0.1 | 43.48 | 15.0 | 24.0 | 0.9259 | 70/30 | 0.558 |
| C | Al(AcAc)₃ | 0.1 | 43.48 | 15.0 | 24.0 | 0.9259 | 70/30 | 0.336 |
| D | Al(AcAc)₃ | 0.1 | 43.48 | 15.0 | 24.0 | 0.9259 | 70/30 | 0.558 |
| E | Al(AcAc)₃ | 0.1 | 43.48 | 15.0 | 24.0 | 0.9259 | 70/30 | 0.354 |
| F | Al(AcAc)₃ | 0.1 | 43.48 | 15.0 | 24.0 | 0.9259 | 70/30 | 0.558 |
| G | Al(AcAc)₃ | 0.1 | 43.48 | 15.0 | 24.0 | 0.9259 | 70/30 | 0.558 |
| H | Al(AcAc)₃ | 0.1 | 43.48 | 15.0 | 24.0 | 0.9259 | 70/30 | 0.354 |
| I | Al(AcAc)₃ | 0.1 | 43.48 | 15.0 | 24.0 | 0.9259 | 70/30 | 0.336 |
| J | Al(AcAc)₃ | 0.1 | 46.63 | 15.0 | 24.0 | 0.8991 | 70/30 | 0.0 |
| K | Al(AcAc)₃ | 0.1 | 46.63 | 15.0 | 24.0 | 0.9259 | 70/30 | 0.558 |
| L | Al(AcAc)₃ | 0.1 | 46.63 | 15.0 | 24.0 | 0.9259 | 70/30 | 0.354 |
| M | Al(AcAc)₃ | 0.1 | 46.63 | 15.0 | 24.0 | 0.9259 | 70/30 | 0.336 |
| N | Al(AcAc)₃ | 0.1 | 42.43 | 15.0 | 24.0 | 0.8991 | 70/30 | 0.0 |
| O | Al(AcAc)₃ | 0.1 | 42.43 | 15.0 | 24.0 | 0.9259 | 70/30 | 0.558 |
| P | Al(AcAc)₃ | 0.1 | 43.43 | 15.0 | 24.0 | 0.9259 | 70/30 | 0.336 |

b-1: Hollow $SiO_2$, b-2: $TiO_2$, b-3: water soluble acrylic resin

c-1: Nitric acid type binder, c-2: oxalic acid type binder, c-3: L-tartaric acid type binder, c-4: citric acid type binder

d1-1: α-Terpineol, d1-2: hydroxypropylcellulose (manufactured by Nippon Soda Co., Ltd., tradename: HPC SSL)

d1-3: Polyacrylic acid (manufactured by Sigma-Aldrich, <partly sodium salt>, Mw: 2000)

d2-1: Oxalic acid, d2-2: L-tartaric acid, d2-3: citric acid

(Electrostatic coating apparatus)

An electrostatic coating apparatus 10 (liquid electrostatic coater, manufactured by ASAHI SUNAC CORPORATION) as shown in Fig. 1 was prepared.

As the electrostatic coating guns 17, rotary atomizing electrostatic automatic coating guns (Espo Turbo II ESA88, manufactured by ASAHI SUNAC CORPORATION, cup of 5 mm in diameter) were prepared. Three rotary atomizing electrostatic automatic coating guns were arranged at intervals of 600 mm in a direction at right angles to the direction of transport of the substrate 2. A metal mesh tray was used as the electrically conductive substrate 6 to make the temperature distribution of the substrate 2 uniform and to facilitate grounding.

(Example 1)

As a substrate, figured glass [manufactured by Asahi Glass Company, Limited, tradename: "Solite" (figured glass comprising high transmittance soda lime glass (white plate glass) having a low iron content, having pearskin irregularities imparted to one surface), size: 400 mm × 400 mm, thickness: 3.2 mm] was prepared, the pearskin surface of the figured glass was polished with a cerium oxide aqueous dispersion, the cerium oxide was washed away with water, and the figured glass was rinsed with deionized water and dried.

The temperature in the coating booth 11 of the electrostatic coating apparatus 10 shown in Fig: 1 was adjusted to 25°C±1°C and the humidity to 60%±10%.

On the chain conveyor 12 of the electrostatic coating apparatus 10, the figured glass preliminarily heated to 30 to 35°C was placed via the electrically conductive substrate 6. While the figured glass was transported by the chain conveyor 12 at a constant rate, the coating composition (A) was applied to the pearskin surface of the figured glass by an electrostatic coating method under application conditions shown in Table 2, and the coating composition was baked in the air at 550°C for 30 minutes to obtain an article with a low reflection film. The article was evaluated. The results are shown in Table 2.

[Examples 2 to 16]

Articles having a low reflection film formed were obtained in the same manner as in Example 1 except that the coating composition and the application conditions were changed to the coating compositions and the application conditions as shown in Table 2. The articles were evaluated. The results are shown in Table 2.

[Table 2]

| Ex. | Coating composition | Application conditions | | | | | Evaluation | | | | | |
|---|---|---|---|---|---|---|---|---|---|---|---|---|
| | | Rate of transport [m/min] | Distance between nozzle tip and substrate [mm] | Voltage [kV] | Coating composition supply amount [mL/min] | Air pressure [MPa] | Average thickness of low reflection film [nm] | Difference in transmittance with substrate [%] | Bottom reflectance [%] | Bottom wavelength [nm] | Haze [%] | Abrasion resistance |
| 1 | A | 8.5 | 170 | -45 | 50 | 0.36/0.08 | 94 | 2.37 | 0.46 | 495 | 0.5 | ○ |
| 2 | B | 8.5 | 170 | -60 | 50 | 0.36/0.06 | 101 | 2.63 | 0.30 | 525 | 0.2 | ○ |
| 3 | C | 8.5 | 170 | -60 | 50 | 0.36/0.06 | 108 | 2.66 | 0.51 | 570 | 0.2 | ○ |
| 4 | D | 8.5 | 170 | -50 | 45 | 0.28/0.06 | 128 | 2.41 | 0.59 | 680 | 0.2 | ○ |
| 5 | E | 8.5 | 170 | -50 | 45 | 0.28/0.06 | 145 | 2.80 | 0.25 | 750 | 0.3 | ○ |
| 6 | F | 8.5 | 170 | -50 | 45 | 0.28/0.06 | 127 | 3.05 | 0.14 | 650 | 0.1 | ○ |
| 7 | G | 8.5 | 170 | -50 | 50 | 0.30/0.06 | 110 | 2.42 | 0.38 | 575 | 0.1 | ○ |
| 8 | H | 8.5 | 170 | -50 | 50 | 0.30/0.06 | 141 | 2.69 | 0.30 | 735 | 0.2 | ○ |
| 9 | I | 8.5 | 170 | -50 | 50 | 0.30/0.06 | 121 | 2.92 | 0.29 | 630 | 0.2 | ○ |
| 10 | J | 8.5 | 170 | -65 | 40 | 0.28/0.08 | 115 | -0.60 | 0.31 | 600 | 0.9 | ○ |
| 11 | K | 8.5 | 170 | -65 | 55 | 0.28/0.08 | 134 | 0.77 | 2.68 | 780 | 0.3 | ○ |
| 12 | L | 8.5 | 170 | -65 | 55 | 0.28/0.08 | 137 | 0.55 | 2.09 | 380 | 0.4 | ○ |
| 13 | M | 8.5 | 170 | -65 | 40 | 0.28/0.08 | 66 | 0.00 | 2.44 | 385 | 0.3 | ○ |
| 14 | N | 8.5 | 170 | -65 | 40 | 0.30/0.08 | 133 | 1.20 | 2.84 | 780 | 0.2 | ○ |
| 15 | O | 8.5 | 170 | -65 | 40 | 0.30/0.08 | 70 | 1.34 | 1.25 | 385 | 0.1 | ○ |
| 16 | P | 8.5 | 170 | -65 | 65 | 0.30/0.08 | 92 | 2.13 | 0.35 | 480 | 0.1 | ○ |

INDUSTRIAL APPLICABILITY

An article with a low reflection film obtained by the production method of the present invention is useful as an article having an antireflection function for the purpose of decreasing reflection of outer light and improving the light transmittance, for example, a cover glass for a solar cell, a solar heat collecting power generation apparatus (such as a heat collecting tube or a reflector), a display (such as a LCD, a PDP, an organic EL, a CRT or a SED), a front plate thereof, window glass for a vehicle (such as an automobile, a train, an aircraft or shipping), window glass for houses, interior glass for houses and shops, industrial fabricated glass, lighting equipment, a cover glass for a touch panel, etc.
The entire disclosure of Japanese Patent Application No. 2011-241864 filed on November 4, 2011 including specification, claims, drawings and summary is incorporated herein by reference in its entirety.

REFERENCE SYMBOLS

1: Article with low reflection film

2: Substrate

3: Low reflection film

10: Electrostatic coating apparatus

**Claims**

1. A method for producing an article with a low reflection film, which is a method for producing an article having a low reflection film on a substrate, comprising a step of applying a coating composition to the substrate using an electrostatic coating method of atomizing and electrifying the coating composition so as to be attached to the substrate by static electricity, and baking or drying the coating composition to form the low reflection film,
wherein the coating composition used in this step comprises a dispersion medium (a), fine particles (b) dispersed in the dispersion medium (a), a binder dissolved or dispersed in the dispersion medium (a), and an organic compound (d) having a polar group dissolved or dispersed in the dispersion medium (a).

2. The method for producing an article with a low reflection film according to Claim 1, wherein the coating composition contains an organic acid as the organic compound (d).

3. The method for producing an article with a low reflection film according to Claim 1 or 2, wherein the coating composition contains a terpene derivative as the organic compound (d).

4. The method for producing an article with a low reflection film according to Claim 1 or 2, wherein the coating composition contains a cellulose derivative as the organic compound (d).

5. The method for producing an article with a low reflection film according to Claim 1 or 2, wherein the coating composition contains an unsaturated carboxylic acid polymer as the organic compound (d).

6. The method for producing an article with a low reflection film according to any one of Claims 1 to 5, wherein when the coating composition is applied, the substrate is placed on an electrically conductive substrate.

7. The method for producing an article with a low reflection film according to any one of Claims 1 to 6, wherein the substrate is made of glass.

8. The method for producing an article with a low reflection film according to any one of Claims 1 to 7, wherein of the coating composition, the mass ratio [fine particles (b)/binder (c)] of the fine particles (b) to the binder (c) is from 10/90 to 95/5, the total solid content concentration of the fine particles (b) and the binder (c) is from 0.5 to 5.0 mass%, and the content of the organic compound (d) is from 0.01 to 2 parts by mass per 1 part by mass of the solid content of the coating composition.

Fig. 1

1

3

2

Fig. 2

1

3
5
4 } 2

Fig. 3

10

11

15 14 13 18

17

6 2

16 16

19 20 12

## INTERNATIONAL SEARCH REPORT

International application No.

PCT/JP2012/078387

| A. CLASSIFICATION OF SUBJECT MATTER |
| --- |
| B05D1/04(2006.01)i, B05D5/06(2006.01)i, G02B1/11(2006.01)i |

According to International Patent Classification (IPC) or to both national classification and IPC

| B. FIELDS SEARCHED |
| --- |
| Minimum documentation searched (classification system followed by classification symbols) |
| B05D1/04, B05D5/06, G02B1/11 |

| Documentation searched other than minimum documentation to the extent that such documents are included in the fields searched |
| --- |
| Jitsuyo Shinan Koho　　　　　　1922-1996　　Jitsuyo Shinan Toroku Koho　　1996-2012 |
| Kokai Jitsuyo Shinan Koho　　1971-2012　　Toroku Jitsuyo Shinan Koho　　1994-2012 |

| Electronic data base consulted during the international search (name of data base and, where practicable, search terms used) |
| --- |
| WPI |

| C. DOCUMENTS CONSIDERED TO BE RELEVANT | | |
| --- | --- | --- |
| Category* | Citation of document, with indication, where appropriate, of the relevant passages | Relevant to claim No. |
| A | JP 2009-244684 A  (Dainippon Printing Co., Ltd.), 22 October 2009 (22.10.2009), entire text; fig. 1 to 2 (Family: none) | 1-8 |
| A | WO 2010/018852 A1  (Asahi Glass Co., Ltd.), 18 February 2010 (18.02.2010), entire text; fig. 1 to 2 & EP 2314649 A1 | 1-8 |
| A | JP 10-318797 A  (Denso Corp.), 04 December 1998 (04.12.1998), paragraphs [0008], [0015] to [0019] (Family: none) | 1-8 |

| ☒ Further documents are listed in the continuation of Box C. | ☐ See patent family annex. |
| --- | --- |

| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |

| Date of the actual completion of the international search<br>14 November, 2012 (14.11.12) | Date of mailing of the international search report<br>27 November, 2012 (27.11.12) |
| --- | --- |
| Name and mailing address of the ISA/<br>Japanese Patent Office | Authorized officer |
| Facsimile No. | Telephone No. |

Form PCT/ISA/210 (second sheet) (July 2009)

18

**INTERNATIONAL SEARCH REPORT**

International application No.

PCT/JP2012/078387

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2011-517620 A  (Centre National de la Recherche Scientifique), 16 June 2011 (16.06.2011), entire text; fig. 1 to 10B & US 2011/2271438 A1    & EP 2271438 A | 1-8 |

Form PCT/ISA/210 (continuation of second sheet) (July 2009)

**EP 2 774 690 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010018852 A
- JP 2011241864 A